(19) Europäisches Patentamt
European Patent Office
Office européen des brevets

(11) EP 3 502 964 B1

(12) EUROPEAN PATENT SPECIFICATION

(45) Date of publication and mention
of the grant of the patent:
**27.10.2021 Bulletin 2021/43**

(51) Int Cl.:
**G06K 9/46** (2006.01)       G06T 17/00 (2006.01)
**G06T 7/10** (2017.01)

(21) Application number: **17382880.7**

(22) Date of filing: **21.12.2017**

(54) **METHOD FOR PROVIDING DESCRIPTORS OF 3D GEOMETRIES**

VERFAHREN ZUR BEREITSTELLUNG VON DESKRIPTOREN FÜR 3D-GEOMETRIEN

PROCÉDÉ PERMETTANT DE FOURNIR DES DESCRIPTEURS DE GÉOMÉTRIES 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietors:
• **Fundacion Centro de Tecnologias de Interaccion Visual y Communicaciones VICOMTECH 20009 Donostia - San Sebastian (Guipuzcoa) (ES)**
• **Dominion Investigación y Desarrollo S.L.U. 48009 Bilbao (ES)**

(72) Inventors:
• **BARANDIARAN MARTIRENA, Iñigo 20009 San Sebastián (ES)**
• **MARTÍN GARCÍA, Ignacio 20009 San Sebastián (ES)**
• **MARCOS ORTEGO, Gorka 20009 San Sebastián (ES)**
• **SERRANO ALMUIÑA, Miguel 48009 Bilbao (ES)**

• **GARCÍA OLAIZOLA, Igor 20009 San Sebastian (GIPUZKOA) (ES)**

(74) Representative: **Balder IP Law, S.L. Paseo de la Castellana 93 5ª planta 28046 Madrid (ES)**

(56) References cited:
**EP-A1- 2 884 427      CN-A- 107 358 239**

• **DIMITRIOS ZARPALAS ET AL: "3D Model Search and Retrieval Using the Spherical Trace Transform", EURASIP JOURNAL ON ADVANCES IN SIGNAL PROCESSING, vol. 2007, no. 1, 23 October 2006 (2006-10-23), XP055480547, DOI: 10.1155/2007/23912**
• **FEDOTOV N G ET AL: "Trace transform of three-dimensional objects: Recognition, analysis, and database search", PATTERN RECOGNITION. IMAGE ANALYSIS, ALLEN PRESS, LAWRENCE, KS, US, vol. 24, no. 4, 16 December 2014 (2014-12-16), pages 566-574, XP035412703, ISSN: 1054-6618, DOI: 10.1134/S105466181404004X [retrieved on 2014-12-16]**

**Description**

**TECHNICAL FIELD**

The present invention relates to the field of 3D geometry digital analysis. More specifically, the present invention relates to a method for providing descriptors of a 3D geometry.

**STATE OF THE ART**

Digital processing of 3D geometries is a complex task that is carried out in many fields of technology. Such digital processing may assist in the control and supervision of processes (e.g. manufacturing processes), the research in different fields such as medicine, architecture, transportation, etc.

As technology advances, the resolution of 3D geometries becomes greater, thus increasing the resemblance between depicted objects and reality. However, the number of vertices, edges and polygons also increases thereby making the 3D geometries more detailed and, thus, the digital processing thereof more computationally complex. And even though the processing power of microprocessors and programmable gate arrays is greater as technology improves, finding a simpler, more effective and consistent digital processing of 3D geometries is still necessary.

Main procedures in digital processing of 3D geometries are registry, alignment, comparison and analysis of such content. Having descriptors of 3D geometries is particularly convenient for tasks like, for example, search, recognition, retrieval, reconstruction and classification of the geometries since the descriptors precisely represent portions of the 3D geometries.

There have been developments in the prior art to provide methods for searching, retrieving analyzing and recognizing 3D geometries.

For example, "3D Model Search and Retrieval Using the Spherical Trace Transform", by Dimitrios Zarpalas et. al., EURASIP JOURNAL ON ADVANCES IN SIGNAL PROCESSING, vol. 2007, no. 1, 23 October 2006, describes applying functionals to a 3D model producing a new domain of concentric spheres, and in said domain a descriptor vector is provided that is rotation invariant and thus suitable for 3D model matching.

Another example is "Trace Transform of Three-Dimensional Objects: Recognition, Analysis, and Database Search", by N. G. Fedotov et. al., PATTERN RECOGNITION. IMAGE ANALYSIS, ALLEN PRESS, LAWRENCE, KS, US, vol. 24, no. 4, 16 December 2014. This document describes a method whereby a trace transform is computed with respect to a three-dimensional image for recognizing it and searching for 3D objects in a database.

Patent document EP 2884427 A1 describes a method for locally describing an image in order to enable comparison of images to detect similarities.

Patent document CN 107358239 A describes a method for image invariant feature extraction based on the circular trace transform.

There is an interest in providing descriptors of 3D geometries that are robust against spatial or photometrical transformations so that, for example, the recognition or the classification of the 3D geometries may be carried out independently of the position or orientation thereof.

**DESCRIPTION OF THE INVENTION**

A first aspect of the present invention relates to a computer-implemented method for providing one or more descriptors of a 3D geometry according to claim 1.

The descriptor represents or describes a region of the 3D geometry thereby making identifiable and recognizable that region and the corresponding key point (i.e. the first key point) for operations with the 3D geometry; the descriptor is a geometry descriptor. The descriptor simplifies the digital processing of the 3D geometry (or a portion thereof) in the search (or identification) and classification of the 3D geometry.

The use of the Trace Transform and the FFT provides a descriptor that is robust against spatial and/or photometrical transformations that otherwise may affect the digital processing of the same. Further, as the angles are computed with respect to the normal of the key point, even if the region for which the descriptor is provided is subject to translation and/or rotation, the first matrix may feature the same values but differently arranged therein; in this respect, the values may be arranged in the first matrix according to the spatial coordinates of each point relative to the 3D geometry. This means that the descriptor precisely represents the corresponding region even if the 3D geometry has its position and/or orientation modified, so a same or similar descriptor could be provided for same regions of two 3D geometries even if one of the 3D geometries is translated or rotated with respect to the other one.

One of the advantages of the FFT is that its computational burden is low and, thus, it does not require large processing power. So even if the 3D geometries become more complex in terms of resolution and details, the FFT does not significantly affect the computational burden of the computer-implemented method.

The resulting descriptor may be, for instance, compared or paired with another descriptor using distance measures, such as Euclidean distances. Based on the distances between pairs of descriptors, it can be determined that the descriptors that are the most similar are those for which the computed distance is minimum from all the computed distances.

In some embodiments, a portion of the 3D geometry comprises the first key point and the plurality of points.

The entire portion of the 3D geometry is represented with the descriptor, so the descriptor represents both the first key point and the plurality of points in a vicinity thereof.

In some embodiments, the first key point is at the center of the portion, and the plurality of points surrounds the first key point.

The portion has a 2D surface that is square. The first key point is located at the center of that surface, and the points of the plurality of points are around the first key point. The points of the plurality of points may or may not be directly in contact with the first key point. This means that, in some embodiments, some points of the plurality of points surround the first key point and are in contact with the same, whereas some other points of the plurality of points surround the first key point but are not in contact with the same (but are in contact with some or all of the some points that are in contact with the first key point).

In some embodiments, selecting a plurality of points in a vicinity of the first key point comprises selecting a plurality of points at a radius R from the first key point in such a way that a square portion with the plurality of points is selected, wherein $R = \sqrt{\frac{n}{100}} d$ , d is a density of a mesh of the 3D geometry, and n is a value selected from: 1, 2, 3, 4 and 5. In some embodiments, a ceiling function (i.e. $R = \left\lceil \sqrt{\frac{n}{100}} d \right\rceil$ ) or a floor function (i.e. $R = \left\lfloor \sqrt{\frac{n}{100}} d \right\rfloor$ ) is applied to R.

The descriptor may preferably represent a portion that is small relative to the entire 3D geometry since other portions of the 3D geometry may also include other key points for which further geometry descriptors may be provided. Further, for tasks such as identification and classification of 3D geometries based on descriptors, the key point and the plurality of points closer to the key point may better identify characteristic portions of a 3D geometry than larger characteristic portions of the 3D geometry comprising more points in the plurality of points.

In this sense, a radius from the key point to a middle of a side of the portion is R, and depends upon the density of the mesh of the 3D geometry, thus the size of the portion depends upon the 3D geometry itself. The value of n determines a percentage of the radius selected, and is has been found out that a natural number between 1 and 5 provides a descriptor representing features of the 3D geometry, and a value of n of 1 or 2 is preferred since the descriptor provides an accurate representation of said features with less data.

In some embodiments, the plurality of points surrounds the first key point; and a first semi-plane of the portion comprises some points of the plurality of points, and a second semi-plane of the portion comprises remaining points of the plurality of points, the first and the second semi-planes sharing an edge, the edge comprising the first key point.

The plurality of points may not surround the first key point evenly, that is, more points of the plurality of points are located on a first semi-plane of the portion than on a second semi-plane of the portion. In some cases, points on the first semi-plane may have more significance than points on the second semi-plane due to geometric characteristics thereof in the 3D geometry. In these cases, the plurality of points comprises more points on the first semi-plane than on the second semi-plane.

In some cases, the first key point is not at the center of the portion. For example, the first key portion may be located proximate to an edge or a corner of the 3D geometry.

In some embodiments, a number of points in each side of the portion is equal to or smaller than 2R+1 points, wherein $R = \sqrt{\frac{n}{100}} d$ , d is a density of a mesh of the 3D geometry, and n is a value selected from: 1, 2, 3, 4 and 5. In some embodiments, a ceiling function (i.e. $R = \left\lceil \sqrt{\frac{n}{100}} d \right\rceil$ ) or a floor function (i.e. $R = \left\lfloor \sqrt{\frac{n}{100}} d \right\rfloor$ ) is applied to R.

Each side or each dimension of the portion comprises 2R + 1 or less points (e.g. 2R points), which may result from selecting the plurality of points with the radius R extending from the first key point. A value of n of 1 or 2 is preferred since the descriptor may provide an accurate representation of said features with less data.

In some embodiments, applying the FFT to the second matrix comprises applying the FFT to each row of the second matrix.

The FFT may be applied row-by-row so that characteristic frequencies of each row are provided in the descriptor.

In some embodiments, applying the FFT to each row of the second matrix comprises: applying the FFT to each row of the second matrix thereby providing a third matrix; for each row of the third matrix, selecting a subset of values of the row; and concatenating all the subsets of values thereby providing the descriptor in vector form.

The descriptor is preferably provided in vector form for easing the use of the same in any operations involving the descriptor.

In some embodiments, selecting the subset of values of each row comprises selecting ten consecutive values of each row of the third matrix starting from a second value of each row.

When the FFT is applied row-by-row, the first value of the resulting FFTs is discarded since that value corresponds to DC or 0 Hz frequency, and does not contribute towards representing the region that comprises the key point with the descriptor. It has been found that by selecting the ten consecutive values after the DC value, an accurate descriptor may be provided.

In some embodiments, the method further comprises repeating steps of the method for providing a descriptor linked to a second key point in the 3D geometry.

The method may be repeated a plurality of times so as to provide descriptors for each key point (e.g. first, second, third, fourth, fifth key points and/or even more key points) in the 3D geometry so that the 3D geometry may be accurately described with a plurality of descriptors (e.g. first, second, third, fourth, fifth descriptors and/or even more descriptors).

A second aspect of the invention relates to a data processing device comprising means for carrying out the steps of a method according to the first aspect of the invention.

In some embodiments, the means are a microprocessor or a digital signal processor.

A third aspect of the invention relates to a computer program product comprising instructions which, when the program is executed by a computer, cause the computer to carry out the steps of a method according to the first aspect of the invention.

A fourth aspect of the invention relates to a computer-readable storage medium comprising instructions which, when executed by a computer, cause the computer to carry out the steps of a method according to the first aspect of the invention.

Similar advantages as those described for the first aspect of the invention also apply to the second, the third and the fourth aspects of the invention.

**BRIEF DESCRIPTION OF THE DRAWINGS**

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows, in a block diagram form, a method in accordance with an embodiment of the invention.
Figure 2 shows an exemplary 3D geometry to which a method of the present disclosure may be applied.
Figure 3 shows a portion of the exemplary 3D geometry of Figure 2.
Figure 4 shows how angles of the points of the portion of Figure 3 may be computed.
Figures 5A-5B show 2D versions of the portion of Figure 3.
Figure 6 shows a matrix with angles computed such as those of Figure 4.
Figures 7A-7B show a Trace Transform of a portion of a 3D geometry.
Figure 8 shows a descriptor in matrix form with values resulting from an FFT.
Figures 9A-9B show a descriptor in matrix and vector forms with a subset of values of the matrix of Figure 8.

**DESCRIPTION OF WAYS OF CARRYING OUT THE INVENTION**

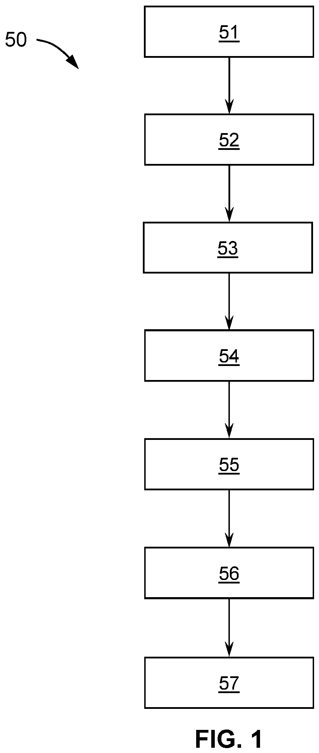

Figure 1 shows a computer-implemented method 50 for providing one or more descriptors of a 3D geometry.

The method 50 comprises a step of determining 51 a key point in the 3D geometry. This may be carried out by applying methods or algorithms for recognition of features as known in the art; by way of example, the step of determining 51 may be carried out with a normal aligned radial feature (NARF) interest point extraction method that is described, for instance, in "NARF: 3D Range Image Features for Object Recognition" by B. Steder, et al., Workshop on Defining and Solving Realistic Perception Problems in Personal Robotics at the IEEE/RSJ Int. Conf. on Intelligent Robots and Systems (IROS), 2010. For each descriptor that is to be provided, a different key point is determined in or extracted from the 3D geometry, and thus 3D geometries may be described with a plurality of descriptors.

Key points of 3D geometries may be those in which special features are represented, for example points at which a slope of the shape is zero or close to zero, or a large value (positive or negative slope). For example in 3D geometries where substantially planar elements are represented, key points may be bulges, protuberances, valleys, etc. (that is, parts of a geometry in which there is a curvature, and preferably where the curvature has abrupt changes in a slope thereof) and preferably the corresponding maxima or minima thereof. In this sense, key points of 3D geometries may be vertices or polygons.

The method 50 further comprises a step of selecting 52 a plurality of points in a vicinity of the key point determined. Each point of the plurality of points is at least connected or in touch with the key point or with at least one another point of the plurality of points, and the plurality of points surrounds the key point. In other words, the plurality of points may be a continuous surface or line that partially or completely surrounds the key point. For each point of the plurality of points, spatial coordinates thereof are obtained.

The plurality of points together with the key point defines a portion of the 3D geometry that is to be represented with a descriptor. Said portion is square (at least a 2D representation of said portion, that is, if said portion is extracted from a 3D geometry, a planar representation of the portion features a square shape).

The method 50 also comprises a step of computing 53 a normal of the key point and a normal of each point of the plurality of points. A tangent plane may be digitally provided for each point of the 3D geometry, and a normal to each tangent plane may be digitally computed.

The method 50 also comprises a step of computing 54 an angle between the normal of each point of the plurality of points and the normal of the key point. That is, the angles are computed relative to the normal of the key point so that each point of the plurality of points may be represented as an angle with respect to the key point, particularly to the normal thereof.

The method 50 further comprises a step of providing 55 a matrix with the angles computed. The angles are included in the matrix in accordance with a spatial position of each of the points represented therein. In this sense, when the key point and the plurality of points in the vicinity thereof are determined in or extracted from the 3D geometry, the spatial coordinates thereof relative to the 3D geometry are obtained so that the angles computed may be provided in the matrix based on the spatial coordinates of each point.

The method 50 also comprises a step of applying 56 a Trace Transform to the matrix with the angles computed thereby providing a matrix with values resulting from the Trace Transform.

The method 50 also comprises a step of applying 57 an FFT to the matrix with values resulting from the Trace Transform. The FFT is applied row-by-row to the matrix, that is, an FFT is applied to each row of the matrix thereby providing the resulting values in rows as well.

In some embodiments, the result from the FFT algorithm is the descriptor of the portion including the key point and the selected plurality of points; the result may be provided in matrix form or in a vector form (concatenating the rows resulting from the FFT).

In some embodiments, the result from the FFT algorithm is provided in matrix form with each row of the matrix being a result of the FFT being applied to a corresponding row of the matrix with values resulting from the Trace Transform. From this matrix, the column corresponding to DC value is preferably eliminated since it does not contribute towards the representation with the descriptor. The rest of the matrix may be provided as the descriptor, or in some cases a subset of values of each row of the matrix is selected so as to provide the descriptor. Particularly, the first ten consecutive values (after the DC value, namely, after the first column) of each row are selected for the descriptor, and this may be provided in matrix form or in vector form (concatenating each group of ten consecutive values of each row).

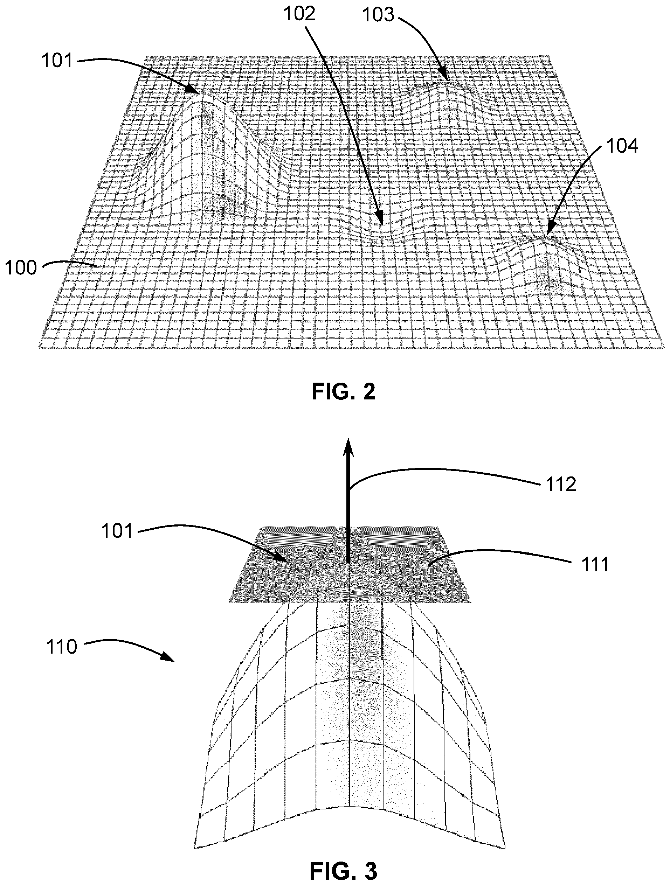

Figure 2 shows an exemplary 3D geometry 100. The 3D geometry comprises first, second, third and fourth points 101-104 on corresponding bulges that may be regarded as key points; portions of the corresponding bulges may be represented with descriptors. The first, the third and the fourth key points 101, 103, 104 are in the bulges which are protrusions in the 3D geometry 100 that project from a first face thereof (a top face), whereas the second key point 102 is in the bulge which is a protrusion in the 3D geometry 100 that projects from a second face thereof (a bottom face).

Figure 3 shows a portion 110 of the 3D geometry 100 of Figure 2. The portion 110 is part of a bulge that includes the first key point 101 of Figure 2.

The portion 110 includes a plurality of points (each vertex of each polygon illustrated) that may be selected for providing the descriptor.

A plane 111 tangent to the key point 101, particularly to the surface in which the key point 101 is comprised, can be determined. A normal 112 to the tangent plane 111 can be computed; said normal 112 is the normal of the key point 101.

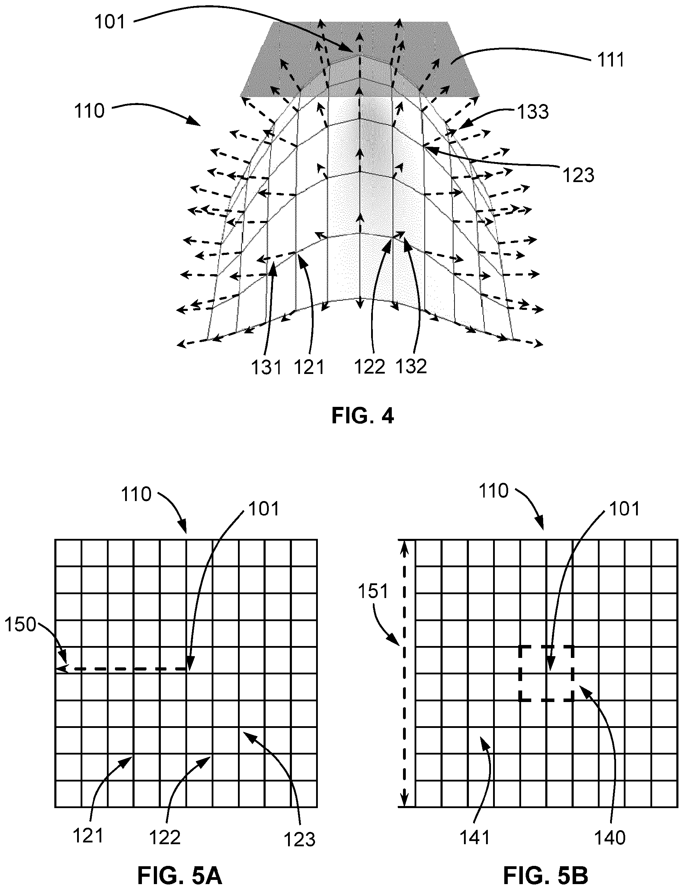

Figure 4 shows how angles of the points of the portion 110 of Figure 3 may be computed. For not obscuring the present disclosure, from the plurality of points of portion 110, first, second and third points 121-123 of the plurality of points are indicated with reference signs for illustrative purposes only, however a normal of each point of the plurality of points is shown in Figure 4 (with arrows having dashed lines for illustrative purposes only).

For each point of the plurality of points, and by way of example for each of the first, the second and the third points 121-123, a plane (not illustrated) tangent to the surface containing them may be determined. Then, a normal to each plane may be computed thereby providing a normal of each point of the plurality of points, such as a first normal 131 (normal of the first point 121), a second normal 132 (normal of the second point 122), and a third normal 133 (normal of the third point 123).

Further, for each point of the plurality of points, it is computed the angle between the normal of the point and the normal 112 of the key point 101, which may be computed with the following formula:

$$cos\theta = \frac{A \cdot B}{|A||B|}$$

where θ is the angle, A is the normal of the key point, and B is the normal of the point of the plurality of points.

Figures 5A-5B show 2D versions of the portion 110 of Figure 3.

In Figure 5A is shown the key point 101, and the plurality of points described with reference to Figures 3 and 4, from which the first, the second, and the third points 121-123 are identified with reference signs. It is readily apparent that the plurality of points selected includes the points corresponding to vertices of each polygon. An arrow 150 with dashed line illustrates a radius R for obtaining the portion 110. The radius R extends from the center of the portion 100 (where the key point 101 is located) to a middle of one side of the portion 110; with said radius R, the plurality of points has been selected in such a way that the square portion 110 is provided.

In Figure 5B is shown, for illustrative purposes only, a contour 140 (shown with dashed lines) in which the points of the plurality of points are connected or in contact with the key point 101, thus the points in the contour 140 completely surround the key point 101. Further, remaining points of the plurality of points that are comprised in area 141 of the portion 110, also surround the key point 101 but are not in contact with the key point 101. All the points of the plurality of points are in the vicinity of the key point 101, but it is readily apparent that not all points need be in contact with the key point 101. Further, an arrow 151 with dashed line illustrates a side of the portion 110, which comprises two times R plus one points.

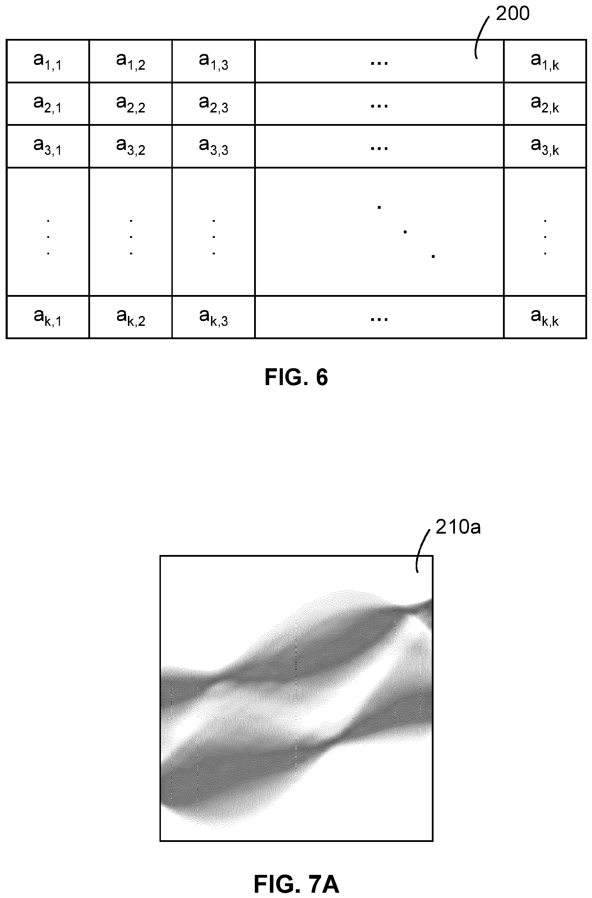

Figure 6 shows an exemplary matrix 200 with values corresponding to angles that are computed as described with reference to Figure 4. The matrix 200 comprises as many rows and columns as a maximum number of points that are in the plurality of points in a first dimension, and maximum number of points that are in the plurality of points in a second dimension. In some cases, the maximum numbers of points are increased by 1 when in a line with the maximum number of points along any of the first and the second dimensions there is also the key point present. With reference to Figures 5A and 5B, a matrix 200 including the corresponding angles would have at least eleven rows and eleven columns, that is, the value k shown in matrix 200 is equal to 11, which is precisely the number of points in each dimension as illustrated with the arrow 151.

The matrix 200 also includes a value for the key point and which is zero since that is the angle between its normal relative, precisely, to its normal.

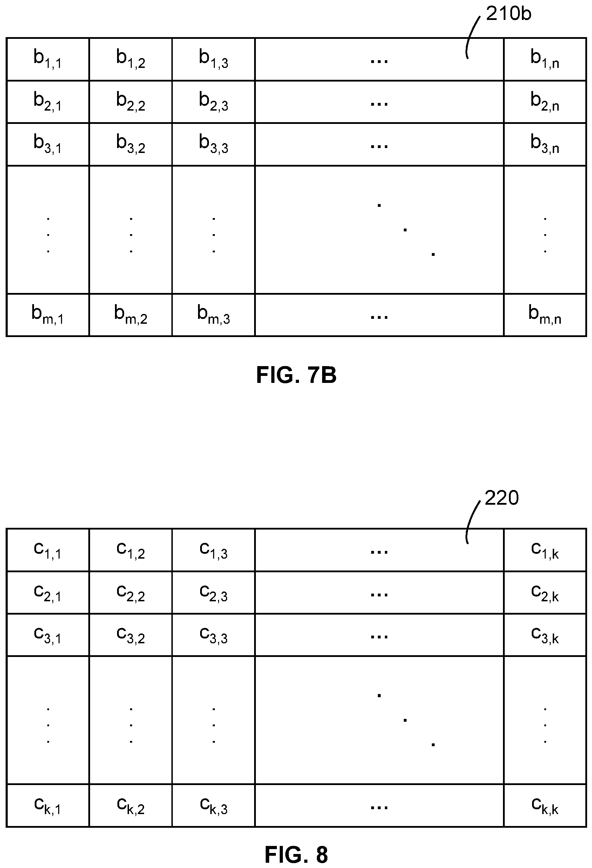

Figures 7A-7B show a Trace Transform of a portion of a 3D geometry. In Figure 7A there is shown an exemplary result of a Trace Transform as an image 210a, whereas in Figure 7B there is shown an exemplary result of a Trace Transform as a matrix 210b. By providing a color-coded version of the values of the matrix 210b, the Trace Transform of the portion may be shown as the image 210a.

The Trace Transform may compress the data corresponding to the portion for which a geometry descriptor is to be provided and, moreover, provides robustness or invariance to some affine transformation such as rotation.

Figure 8 shows a descriptor 220 in matrix form with values resulting from an FFT. The descriptor 220 is provided by applying an FFT to a Trace Transform result such as the image 210a or the matrix 210b of Figures 7A-7B.

The FFT is applied to the Trace Transform result row-by-row, that is, an FFT is applied to each row of the Trace Transform result. A result from each of these FFTs is an array of values corresponding to the frequency components of the row of the Trace Transform result, the first value of the array of values being a DC value (i.e. 0 Hz frequency). Each array of values may be arranged in a row of the matrix like the descriptor 220, and may include k rows, and k columns, such as the matrix 200 of Figure 6 with values corresponding to angles, where k is a natural number.

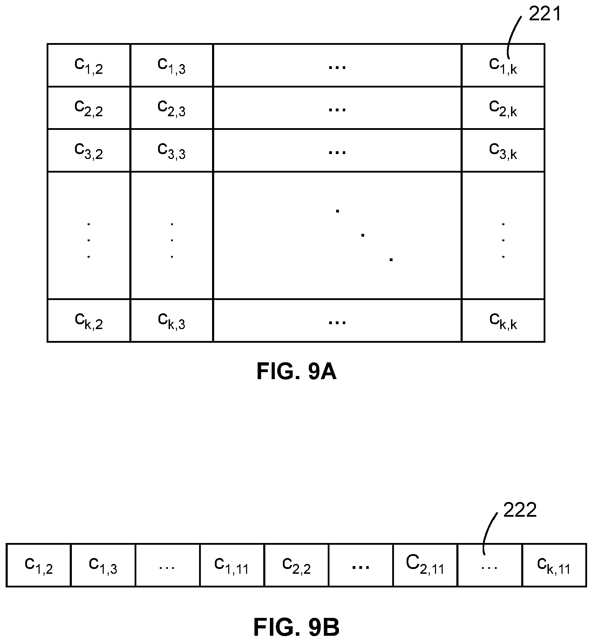

Figures 9A-9B show first and second descriptors 221, 222 (corresponding to a same key point with a same plurality of points in the vicinity thereof) in matrix and vector forms, respectively, with a subset of values of the matrix of Figure 8. Each of the first and the second descriptors 221, 222 comprises the same subset of values of the matrix of Figure 8, which is ten consecutive values of each row of the matrix after the first value. That is, for each row, the values from the second to the eleventh position of the array of values are selected, and thus the first value (i.e. DC value) and any other values after the eleventh position are discarded.

The first descriptor 221 is provided in matrix form by arranging the ten values of each row as a row of the descriptor 221, hence as the first descriptor 221 is a subset of values of the matrix of Figure 8, the matrix of the first descriptor 221 comprises k rows, and 10 columns.

The second descriptor 222 is provided in vector (i.e. array) form by concatenating the ten values of each row, hence as the second descriptor 222 is a subset of the matrix of Figure 8, the vector of the second descriptor 221 comprises k times 10 positions. In this sense, after the ten values of the first row are provided, the ten values of the second row are provided next, then the ten values of the third row are provided next, and so on up to the ten values of the k-th row.

Even though the terms first, second, third, etc. have been used herein to describe several components or entities, it will be understood that the components or entities should not be limited by these terms since the terms are only used to distinguish one component or entity from another. For example, the first matrix could as well be named second matrix and the second matrix could be named first matrix without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method (50) for providing one or more descriptors (220-222) of a 3D geometry (100), the method (50) comprising:

   determining (51) a first key point (101-104) in the 3D geometry (100); and
   selecting (52) a plurality of points (121-123, 140-141) in a vicinity (140-141) of the first key point (101-104);
**characterized by:**

computing (53) a normal (112) of the first key point (101-104) and a normal (131-133) of each point of the plurality of points (121-123, 140-141), each normal (112, 131-133) being computed with respect to a tangent plane digitally provided for the respective point;

computing (54) an angle of each normal (131-133) of the plurality of points (121-123, 140-141) with respect to the normal (112) of the first key point (101-104);

providing (55) a first matrix (200) comprising the angles computed;

applying (56) a Trace Transform to the first matrix (200) thereby providing a second matrix (210b);

applying (57) a Fast Fourier Transform, FFT, to the second matrix (210b) thereby providing a descriptor (220-222); and

using the descriptor (220-222) provided for:

- searching and classifying a 3D geometry; or
- identifying and classifying a 3D geometry.

2. The method (50) of claim 1, wherein a portion (110) of the 3D geometry (100) comprises the first key point (101-104) and the plurality of points (121-123, 140-141).

3. The method of claim 2, wherein the portion (110) is square.

4. The method (50) of any of claims 2-3, wherein the first key point (101-104) is at the center of the portion (110), and the plurality of points (121-123, 140-141) surrounds the first key point (101-104).

5. The method (50) of claims 2 and 4, wherein selecting a plurality of points in a vicinity of the first key point comprises selecting a plurality of points at a radius R from the first key point in such a way that a square portion with the plurality of points is selected, wherein

$$R = \sqrt{\frac{n}{100}d}$$

, d is a density of a mesh of the 3D geometry, and n is a value selected from: 1, 2, 3, 4 and 5.

6. The method (50) of claim 2, wherein:

the plurality of points (121-123, 140-141) surrounds the first key point (101-104); and

a first semi-plane of the portion (110) comprises some points of the plurality of points (121-123, 140-141), and a second semi-plane of the portion (110) comprises remaining points of the plurality of points (121-123, 140-141), the first and the second semi-planes sharing an edge, the edge comprising the first key point (101-104).

7. The method (50) of any of claims 2-6, wherein a number of points in each side of the portion (110) is equal to or smaller than 2R+1 points, wherein

$$R = \sqrt{\frac{n}{100}d}$$

, d is a density of a mesh of the 3D geometry, and n is a value selected from: 1, 2, 3, 4 and 5.

8. The method (50) of any of claims 5 and 7, wherein n is 1 or 2.

9. The method (50) of any of claims 1-8, wherein applying the FFT to the second matrix (210b) comprises applying the FFT to each row of the second matrix (210b).

10. The method (50) of claim 9, wherein applying the FFT to each row of the second matrix (210b) comprises:

applying the FFT to each row of the second matrix (210b) thereby providing a third matrix (220); for each row of the third matrix (220), selecting a subset of values of the row; and concatenating all the subsets of values thereby providing the descriptor (222) in vector form.

11. The method (50) of claim 10, wherein selecting the subset of values of each row comprises selecting ten consecutive values of each row of the third matrix (220) starting from a second value of each row.

12. The method (50) of any of claims 1-11, further comprising repeating steps of the method for providing a descriptor (220-222) linked to a second key point (101-104) in the 3D geometry (100).

13. A data processing device comprising means for carrying out the steps (51-57) of the method (50) of any of claims 1-12.

14. A computer program product comprising instructions which, when the program is executed by a computer, cause the computer to carry out the steps (51-57) of the method (50) of any of claims 1-12.

**Patentansprüche**

1. Computer-implementiertes Verfahren (50) zum Bereitstellen eines oder mehrerer Deskriptoren (220-222) einer 3D-Geometrie (100), wobei das Verfahren (50) umfasst:

   Bestimmen (51) eines ersten Schlüsselpunktes (101-104) in der 3D-Geometrie (100); und Auswählen (52) einer Mehrzahl von Punkten (121-123, 140-141) in einer Umgebung (140-141) des ersten Schlüsselpunkts (101-104);
   **gekennzeichnet durch**:

   Berechnen (53) einer Normalen (112) des ersten Schlüsselpunktes (101-104) und einer Normalen (131-133) jedes Punktes der Mehrzahl von Punkten (121-123, 140-141), wobei jede Normale (112, 131-133) in Bezug auf eine Tangentialebene berechnet wird, die digital für den jeweiligen Punkt bereitgestellt ist;
   Berechnen (54) eines Winkels jeder Normalen (131-133) der Mehrzahl von Punkten (121-123, 140-141) in Bezug auf die Normale (112) des ersten Schlüsselpunktes (101-104);
   Bereitstellen (55) einer ersten Matrix (200) mit den berechneten Winkeln;
   Anwenden (56) einer Spurtransformation auf die erste Matrix (200), wodurch eine zweite Matrix (210b) bereitgestellt wird;
   Anwenden (57) einer schnellen Fourier-Transformation, FFT, auf die zweite Matrix (210b), wodurch ein Deskriptor (220-222) bereitgestellt wird; und
   Verwenden des bereitgestellten Deskriptors (220-222) für:

   - Suchen und Klassifizieren einer 3D-Geometrie; oder
   - Identifizieren und Klassifizieren einer 3D-Geometrie.

2. Verfahren (50) nach Anspruch 1, wobei ein Teil (110) der 3D-Geometrie (100) den ersten Schlüsselpunkt (101-104) und die Mehrzahl von Punkten (121-123,140-141) umfasst.

3. Verfahren nach Anspruch 2, wobei der Teil (110) quadratisch ist.

4. Verfahren (50) nach einem der Ansprüche 2 bis 3, wobei sich der erste Schlüsselpunkt (101-104) in der Mitte des Teils (110) befindet und die Mehrzahl von Punkten (121-123, 140-141) den ersten Schlüsselpunkt (101-104) umgibt.

5. Verfahren (50) nach einem der Ansprüche 2 und 4, wobei das Auswählen einer Mehrzahl von Punkten in der Umgebung des ersten Schlüsselpunkts das Auswählen einer Mehrzahl von Punkten in einem Radius R von dem ersten Schlüsselpunkt in der Weise umfasst, dass ein quadratischer Teil mit der Mehrzahl von Punkten ausgewählt wird, wobei

   $$R = \sqrt{\frac{n}{100}} \, d \text{ ist}$$

   ist, d eine Dichte eines Netzes der 3D-Geometrie ist und n ein Wert ist, der ausgewählt ist aus: 1, 2, 3, 4 und 5.

6. Verfahren (50) nach Anspruch 2, wobei:

   die Mehrzahl von Punkten (121-123, 140-141) den ersten Schlüsselpunkt (101-104) umgibt; und
   eine erste Halbebene des Teils (110) einige Punkte der Mehrzahl von Punkten (121-123, 140-141) umfasst, und eine zweite Halbebene des Teils (110) die übrigen Punkte der Mehrzahl von Punkten (121-123, 140-141) umfasst, wobei die erste und die zweite Halbebene eine Kante teilen, wobei die Kante den ersten Schlüsselpunkt (101-104) umfasst.

7. Verfahren (50) nach einem der Ansprüche 2 bis 6, wobei eine Anzahl von Punkten auf jeder Seite des Teils (110) gleich oder kleiner als 2R+1 Punkte ist,

   $$R = \sqrt{\frac{n}{100}} \, d$$

   wobei ist, d eine Dichte eines Netzes der 3D-Geometrie ist und n ein Wert ist, der ausgewählt ist aus: 1, 2, 3, 4 und 5.

8. Das Verfahren (50) nach einem der Ansprüche 5 und 7, wobei n 1 oder 2 ist.

9. Verfahren (50) nach einem der Ansprüche 1 bis 8, wobei die Anwendung der FFT auf die zweite Matrix (210b) die Anwendung der FFT auf jede Zeile der zweiten Matrix (210b) umfasst.

10. Verfahren (50) nach Anspruch 9, wobei das Anwenden der FFT auf jede Zeile der zweiten Matrix (210b) umfasst:

    Anwenden der FFT auf jede Zeile der zweiten Matrix (210b), wodurch eine dritte Matrix (220) bereitgestellt wird;
    für jede Zeile der dritten Matrix (220), Auswählen einer Teilmenge von Werten der Zeile; und
    Verketten aller Untermengen von Werten, wodurch der Deskriptor (222) in Vektorform bereitgestellt wird.

**11.** Verfahren (50) nach Anspruch 10, wobei das Auswählen der Teilmenge von Werten jeder Zeile das Auswählen von zehn aufeinanderfolgenden Werten jeder Zeile der dritten Matrix (220), beginnend mit einem zweiten Wert jeder Zeile, umfasst.

**12.** Das Verfahren (50) nach einem der Ansprüche 1 bis 11, ferner umfassend ein Wiederholen von Schritten des Verfahrens zum Bereitstellen eines Deskriptor (220 bis 222), der mit einem zweiten Schlüsselpunkt (101 bis 104) in der 3D-Geometrie (100) verknüpft ist.

**13.** Datenverarbeitungsgerät mit Mitteln zur Durchführung der Schritte (51-57) des Verfahrens (50) nach einem der Ansprüche 1 bis 12.

**14.** Computerprogrammprodukt, das Anweisungen enthält, die, wenn das Programm von einem Computer ausgeführt wird, den Computer veranlassen, die Schritte (51-57) des Verfahrens (50) nach einem der folgenden Ansprüche auszuführen Ansprüche 1 bis 12.

## Revendications

**1.** Méthode mise en œuvre par ordinateur (50) pour fournir un ou plusieurs descripteurs (220-222) d'une géométrie en 3D (100), la méthode (50) comprenant :

la détermination (51) d'un premier point clé (101-104) dans la géométrie en 3D (100) ; et
la sélection (52) d'une pluralité de points (121-123, 140-141) dans un voisinage (140-141) du premier point clé (101-104) ;
**caractérisé par** :

le calcul (53) d'une normale (112) du premier point clé (101-104) et d'une normale (131-133) de chaque point de la pluralité de points (121-123, 140-141), chaque normale (112, 131-133) étant calculée en fonction d'un plan tangentiel fourni numériquement pour le point respectif ;
le calcul (54) d'un angle de chaque normale (131-133) de la pluralité de points (121-123, 140-141) en fonction de la normale (112) du premier point clé (101-104) ;
la fourniture (55) d'une première matrice (200) comprenant les angles calculés ;
l'application (56) d'une Transformation de Trace à la première matrice (200), fournissant ainsi une deuxième matrice (210b) ;
l'application (57) d'une Transformation de Fourier Rapide, FFT, à la deuxième matrice (210b), fournissant ainsi un descripteur (220-222) ; et
l'utilisation du descripteur (220-222) fourni pour :

- rechercher et classer une géométrie en 3D ; ou
- identifier et classer une géométrie en 3D.

**2.** Méthode (50) selon la revendication 1, dans laquelle une partie (110) de la géométrie en 3D (100) comprend le premier point clé (101-104) et la pluralité de points (121-123, 140-141).

**3.** Méthode selon la revendication 2, dans laquelle la partie (110) est carrée.

**4.** Méthode (50) selon l'une quelconque des revendications 2-3, dans laquelle le premier point clé (101-104) est au centre de la partie (110) et la pluralité de points (121-123, 140-141) entoure le premier point clé (101-104).

**5.** Méthode (50) selon les revendications 2 et 4, dans laquelle la sélection d'une pluralité de points dans un voisinage du premier point clé comprend la sélection d'une pluralité de points à un rayon R du premier point clé de telle sorte qu'une partie carrée avec la pluralité de points soit sélectionnée, dans laquelle

$$R = \sqrt{\frac{n}{100}} d$$

, d est une densité d'une maille de la géométrie en 3D et n est une valeur sélectionnée parmi : 1, 2, 3, 4 et 5.

**6.** Méthode (50) selon la revendication 2, dans laquelle :

la pluralité de points (121-123, 140-141) entoure le premier point clé (101-104) ; et
un premier demi-plan de la partie (110) comprend quelques points de la pluralité de points (121-123, 140-141), et un second demi-plan de la partie (110) comprend des points restants de la pluralité de points (121-123, 140-141), le premier et le second demi-plans partageant un bord, le bord comprenant le premier point clé (101-104).

**7.** Méthode (50) selon l'une quelconque des revendications 2-6, dans laquelle un nombre de points dans chaque côté de la partie (110) est inférieur ou égal

$$R = \sqrt{\frac{n}{100}} d$$

à 2R+1 points, dans laquelle , d est une densité d'une maille de la géométrie en 3D et n est une valeur sélectionnée parmi : 1, 2, 3, 4 et 5.

8.  Méthode (50) selon l'une quelconque des revendications 5 et 7, dans laquelle n est 1 ou 2.

9.  Méthode (50) selon l'une quelconque des revendications 1-8, dans laquelle l'application de la FFT à la deuxième matrice (210b) comprend l'application de la FFT à chaque rangée de la deuxième matrice (210b).

10. Méthode (50) selon la revendication 9, dans laquelle l'application de la FFT à chaque rangée de la deuxième matrice (210b) comprend :

    l'application de la FFT à chaque rangée de la deuxième matrice (210b), fournissant ainsi une troisième matrice (220) ;
    pour chaque rangée de la troisième matrice (220), la sélection d'un sous-ensemble de valeurs de la rangée ; et
    la concaténation de tous les sous-ensembles de valeurs, fournissant ainsi le descripteur (222) sous une forme de vecteur.

11. Méthode (50) selon la revendication 10, dans laquelle la sélection du sous-ensemble de valeurs de chaque rangée comprend la sélection de dix valeurs consécutives de chaque rangée de la troisième matrice (220) en partant d'une deuxième valeur de chaque rangée.

12. Méthode (50) selon l'une quelconque des revendications 1-11, comprenant en outre des étapes de la méthode se répétant pour fournir un descripteur (220-222) relié à un second point clé (101-104) dans la géométrie en 3D (100).

13. Dispositif de traitement de données comprenant un moyen de réalisation des étapes (51-57) de la méthode (50) selon l'une quelconque des revendications 1-12.

14. Produit de programme informatique comprenant des instructions qui, lorsque le programme est exécuté par un ordinateur, amène l'ordinateur à mettre en œuvre les étapes (51-57) de la méthode (50) selon l'une quelconque des revendications 1-12.

50

```
┌──────────────┐
│      51      │
└──────────────┘
        │
        ▼
┌──────────────┐
│      52      │
└──────────────┘
        │
        ▼
┌──────────────┐
│      53      │
└──────────────┘
        │
        ▼
┌──────────────┐
│      54      │
└──────────────┘
        │
        ▼
┌──────────────┐
│      55      │
└──────────────┘
        │
        ▼
┌──────────────┐
│      56      │
└──────────────┘
        │
        ▼
┌──────────────┐
│      57      │
└──────────────┘
```

**FIG. 1**

FIG. 2

FIG. 3

**FIG. 4**

**FIG. 5A**

**FIG. 5B**

200

| $a_{1,1}$ | $a_{1,2}$ | $a_{1,3}$ | ... | $a_{1,k}$ |
|-----------|-----------|-----------|-----|-----------|
| $a_{2,1}$ | $a_{2,2}$ | $a_{2,3}$ | ... | $a_{2,k}$ |
| $a_{3,1}$ | $a_{3,2}$ | $a_{3,3}$ | ... | $a_{3,k}$ |
| $\vdots$ | $\vdots$ | $\vdots$ | $\ddots$ | $\vdots$ |
| $a_{k,1}$ | $a_{k,2}$ | $a_{k,3}$ | ... | $a_{k,k}$ |

**FIG. 6**

210a

**FIG. 7A**

| $b_{1,1}$ | $b_{1,2}$ | $b_{1,3}$ | ... | $b_{1,n}$ |
|---|---|---|---|---|
| $b_{2,1}$ | $b_{2,2}$ | $b_{2,3}$ | ... | $b_{2,n}$ |
| $b_{3,1}$ | $b_{3,2}$ | $b_{3,3}$ | ... | $b_{3,n}$ |
| ⋮ | ⋮ | ⋮ | ⋱ | ⋮ |
| $b_{m,1}$ | $b_{m,2}$ | $b_{m,3}$ | ... | $b_{m,n}$ |

210b

**FIG. 7B**

| $c_{1,1}$ | $c_{1,2}$ | $c_{1,3}$ | ... | $c_{1,k}$ |
|---|---|---|---|---|
| $c_{2,1}$ | $c_{2,2}$ | $c_{2,3}$ | ... | $c_{2,k}$ |
| $c_{3,1}$ | $c_{3,2}$ | $c_{3,3}$ | ... | $c_{3,k}$ |
| ⋮ | ⋮ | ⋮ | ⋱ | ⋮ |
| $c_{k,1}$ | $c_{k,2}$ | $c_{k,3}$ | ... | $c_{k,k}$ |

220

**FIG. 8**

221

| $c_{1,2}$ | $c_{1,3}$ | ... | $c_{1,k}$ |
|---|---|---|---|
| $c_{2,2}$ | $c_{2,3}$ | ... | $c_{2,k}$ |
| $c_{3,2}$ | $c_{3,3}$ | ... | $c_{3,k}$ |
| ⋮ | ⋮ | ⋱ | ⋮ |
| $c_{k,2}$ | $c_{k,3}$ | ... | $c_{k,k}$ |

**FIG. 9A**

222

| $c_{1,2}$ | $c_{1,3}$ | ... | $c_{1,11}$ | $c_{2,2}$ | ... | $c_{2,11}$ | ... | $c_{k,11}$ |
|---|---|---|---|---|---|---|---|---|

**FIG. 9B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2884427 A1
- CN 107358239 A

**Non-patent literature cited in the description**

- **DIMITRIOS ZARPALAS.** 3D Model Search and Retrieval Using the Spherical Trace Transform. *EURASIP JOURNAL ON ADVANCES IN SIGNAL PROCESSING,* 23 October 2006, vol. 2007 (1
- **N. G. FEDOTOV.** Trace Transform of Three-Dimensional Objects: Recognition, Analysis, and Database Search. *PATTERN RECOGNITION. IMAGE ANALYSIS, ALLEN PRESS, LAWRENCE, KS, US,* 16 December 2014, vol. 24 (4
- **B. STEDER et al.** NARF: 3D Range Image Features for Object Recognition. *Workshop on Defining and Solving Realistic Perception Problems in Personal Robotics at the IEEE/RSJ Int. Conf. on Intelligent Robots and Systems (IROS),* 2010